# FASCICULE DE BREVET EUROPEEN

(11) **EP 3 433 162 B1**
(45) Date de publication et mention de la délivrance du brevet: **02.09.2020**
(21) Numéro de dépôt: 17709137.8
(22) Date de dépôt: 09.02.2017
(51) Int. Cl.: B62D 25/08

(54) **ENSEMBLE D'AUVENT**
HAUBENBAUGRUPPE
COWL ASSEMBLY

(30) Priorité: 24.03.2016 FR 1652546
(43) Date de publication de la demande: 30.01.2019
(73) Titulaire: PSA Automobiles SA, 78300 Poissy (FR)
(72) Inventeur: KRSTIC, Dragan, 90400 Danjoutin (FR); TAVERNIER, Luc, 25470 Trevillers (FR)
(74) Mandataire: Fernandez, Francis Lionel
(86) Numéro de dépôt international: PCT/FR2017/050299
(87) Numéro de publication internationale: WO 2017/162936

(56) Documents cités:
- EP-A2- 0 099 115
- WO-A1-2014/167210
- JP-A- 2007 106 366

## Description

La présente invention est du domaine des éléments de carrosserie équipant la partie avant d'un véhicule automobile, ensemble d'auvent plus spécifiquement. La présente invention relève plus particulièrement des modalités de montage sur un véhicule automobile d'un ensemble d'auvent comprenant un collecteur de fluide amovible et une grille d'auvent.

Les véhicules automobiles sont équipés à leur partie avant d'un ensemble d'auvent comprenant un collecteur de fluide amovible et une grille d'auvent. L'ensemble d'auvent s'étend suivant sa longueur transversalement à l'avant du véhicule entre deux doublures d'aile droite et gauche, en étant interposé entre la base du parebrise et le capot avant du véhicule.

Le collecteur a pour fonction de collecter de l'air à la base du parebrise et de le diriger vers l'habitacle et/ou vers une bouche d'admission d'air d'un circuit aéraulique d'une installation de conditionnement d'air. Le collecteur a aussi pour fonction de collecter et d'évacuer de l'eau, notamment les eaux de ruissellement et/ou l'eau présente dans l'air collecté. Le collecteur procure aussi couramment d'autres fonctions, telle que par exemple la réception d'un filtre à particules fines, pollen notamment, ou encore la réception d'un réservoir d'un liquide de nettoyage du parebrise, voire encore la réception d'une motorisation des essuie-glaces.

Le collecteur est en tôle d'acier ou en matière plastique chargée, et constitue un organe robuste fixé sur la caisse en étant longitudinalement orienté transversalement au véhicule, en bordure de la base du parebrise. Le collecteur est classiquement fixé aux doublures d'aile par l'intermédiaire de supports rapportés, en procurant un accostage de l'ensemble d'auvent contre les doublures d'ailes.

Le collecteur est surmonté à sa face supérieure par la grille d'auvent, disposée suivant sa longueur le long du collecteur. La grille d'auvent affleure classiquement la base du parebrise et le capot. La fonction de la grille d'auvent est d'empêcher que des corps étrangers, tels que des salissures et/ou des feuilles mortes par exemple, ne pénètrent à l'intérieur du collecteur.

La grille d'auvent est couramment en matière plastique, peu épaisse et de structure relativement souple. La grille d'auvent comporte à sa face supérieure une paroi ajourée pour le passage de l'air à son travers. La grille d'auvent est souvent composée de deux éléments de grille longitudinalement aboutés l'un à l'autre et fixés sur le collecteur.

Pour procurer une jonction étanche de l'ensemble d'auvent avec son environnement extérieur, l'ensemble d'auvent est équipé de divers organes d'étanchéité interposés entre l'ensemble d'auvent et son environnement proche. Un joint d'étanchéité est classiquement rapporté le long du bord supérieur de la grille d'auvent affleurant le capot et des éléments d'étanchéité sont rapportés aux extrémités longitudinales de la grille d'auvent pour l'accostage étanche de l'ensemble d'auvent contre les doublures d'aile. Cependant, l'agencement et la réalisation des organes d'étanchéité doit prendre en compte la complexité de forme de l'ensemble d'auvent et/ou de son environnement extérieur.

Par suite, les organes d'étanchéité sont conformés à la demande en étant issus d'une mousse de forme spécifiquement moulée selon la configuration de la grille d'auvent. Le joint d'étanchéité est agencé en tube de forme et s'étend entre les extrémités longitudinales de la grille d'auvent, en raccordement de forme avec les éléments d'étanchéité équipant les extrémités longitudinales de la grille d'auvent. Les éléments d'étanchéité sont constitués de corps en mousse denses et sont spécifiquement moulés en tenant compte de la forme du profil des extrémités longitudinales de la grille d'auvent et de l'agencement des doublures d'aile contre lesquelles les éléments d'étanchéité prennent respectivement appui.

Pour connaître un environnement technologique proche de la présente invention, on pourra se reporter aux documents FR 3 004 405 (PEUGEOT CITROEN AUTOMOBILES SA), FR 2 885 847 (PEUGEOT CITROEN AUTOMOBILES SA) et FR 2 754 503 (PEGUFORM FRANCE SA), qui décrivent des ensembles d'auvent pour véhicule automobile et leurs modalités de montage sur le véhicule.

Par ailleurs, le document JP 2007 106366 A décrit un ensemble d'auvent selon le préambule de la revendication 1.

Dans ce contexte, la présente invention a pour objet un dispositif de montage d'un ensemble d'auvent sur un véhicule automobile, ainsi qu'un ensemble d'auvent apte à être monté sur un véhicule automobile au moyen du dispositif de montage relevant de la présente invention.

Le but visé par la présente invention est de proposer un tel dispositif de montage et un tel ensemble d'auvent, en surmontant des difficultés et en obviant à des inconvénients des dispositifs de montage et ensembles d'auvent connus, dans le contexte des contraintes économiques notoirement sévères dans le domaine fortement concurrentiel de l'automobile.

Parmi ces difficultés et inconvénients, il se pose le problème du positionnement relatif de l'ensemble d'auvent entre ses points de fixation sur la caisse par son fond et sur les doublures d'aile. Les doublures d'ailes maintiennent la géométrie de la face avant du véhicule et des écarts de positionnement transversal des doublures d'aile sont fréquents. Par suite, le positionnement du collecteur relativement entre ses points de fixation sur la caisse et l'accostage de l'ensemble d'auvent contre les doublures d'ailes est délicat à obtenir.

Une autre difficulté réside dans l'efficacité et la réduction des coûts des organes d'étanchéité interposés entre l'ensemble d'auvent et son environnement proche. La formation des organes d'étanchéité par moulage de forme dans des moules de conformations spécifiques est coûteuse et mérite d'être simplifiée, tout en améliorant l'efficacité de l'étanchéité de l'ensemble d'auvent obtenue.

Une autre difficulté réside dans la faculté souhaitable de l'ensemble d'auvent à se déformer sous l'effet d'un choc, notamment dans le cadre des contraintes liées aux chocs piéton. Il est souhaitable que la robustesse de l'ensemble d'auvent, plus particulièrement du collecteur, et/ou les modalités de sa fixation à la caisse, soient adaptées pour répondre aux exigences réglementaires vis-à-vis des chocs piéton.

Il est aussi souhaitable de rechercher des solutions aux difficultés et inconvénients posés par le montage de l'ensemble d'auvent sur le véhicule et/ou par son organisation structurelle, qui permettent de réduire les moyens mis en œuvre pour assembler entre eux les composants de l'ensemble d'auvent et/ou pour monter l'ensemble d'auvent sur le véhicule. Pour rappel, les composants de l'ensemble d'auvent comprennent essentiellement le collecteur, la grille d'auvent et les organes d'étanchéité.

Il est opportun qu'une telle recherche permette de simplifier structurellement l'ensemble d'auvent et ses composants, et de faciliter leur obtention à moindres coûts, sans affecter voire en améliorant leur efficacité au regard de leurs diverses fonctions respectives.

La présente invention concerne un dispositif d'ensemble d'auvent sur la caisse d'un véhicule automobile. L'ensemble d'auvent s'étend classiquement suivant sa longueur entre deux doublures d'aile avant du véhicule, respectivement droite et gauche, typiquement disposées latéralement à l'avant du véhicule. Par suite, l'ensemble d'auvent est orienté suivant sa longueur transversalement à l'avant du véhicule. L'ensemble d'auvent comprend essentiellement un collecteur de fluide amovible fixé à la caisse, et une grille d'auvent globalement plane fixée sur le collecteur à sa face supérieure. Des organes d'étanchéité sont ménagés sur l'ensemble d'auvent pour sa jonction étanche avec son environnement extérieur.

Des éléments d'étanchéité sont notamment rapportés aux faces d'extrémité longitudinale de la grille d'auvent prévues pour être placés en contact avec les doublures d'ailes, ainsi qu'un élément d'étanchéité s'étendant le long de la grille d'auvent en interposition entre l'ensemble d'auvent et le capot du véhicule.

Dans ce contexte, la présente invention propose de conserver une fixation du collecteur à la caisse par son fond, notamment en zone longitudinalement médiane du collecteur. Une telle disposition permet d'éloigner la zone de fixation du collecteur par son fond des zones latérales du véhicule sujettes à être éventuellement soumises à un choc piéton. Plus précisément, il est fait le choix d'exclure une exploitation de toute fixation du collecteur à des parois latérales de la caisse, notamment les doublures d'aile, tel qu'habituellement réalisée par l'intermédiaire de supports rapportés.

Ainsi, la fixation du collecteur sur la caisse est avantageusement strictement distante des zones latérales du véhicule et est exclusivement réalisée par son fond en exemption de toute fixation habituelle sur les doublures d'aile par l'intermédiaire d'un support rapporté. En outre, le positionnement du collecteur sur la caisse est dissocié d'éventuels écarts de position transversale entre les doublures d'aile. L'accostage entre l'ensemble d'auvent et les doublures d'aile est exclusivement réalisé par l'intermédiaire de la grille d'auvent, qui déborde longitudinalement des extrémités longitudinales du collecteur vers les doublures d'ailes.

Il est mis à profit la souplesse structurelle de la grille d'auvent pour compenser les éventuels écarts de position transversale entre les doublures d'aile. Les modalités de montage de la structure d'auvent sur le véhicule en sont simplifiées. La souplesse de la grille d'auvent est de préférence confortée par une mise en conformation arquée de la grille d'auvent dans son plan global entre ses extrémités longitudinales.

En outre, la structure, la réalisation, l'agencement et les modalités de fixation sur la grille d'auvent d'organes d'étanchéité sont aussi simplifiées. Les organes d'étanchéité équipant la grille d'auvent peuvent être réduits à des joints de mousse issus de profilés respectifs à profil constant peu coûteux, pouvant être avantageusement fixé à la grille d'auvent par un matériau adhésif. L'organe d'étanchéité interposé entre la grille d'auvent et le capot du véhicule peut être issu d'un profilé en mousse pouvant s'étendre en continu entre les faces d'extrémités longitudinales de la grille d'auvent placées respectivement en appui contre les doublures d'ailes.

Par ailleurs, la robustesse du collecteur ne fait pas obstacle en cas de choc piéton à une déformation et/ou à une rupture de la grille d'auvent en appui contre les doublures d'aile. Il est souhaitable de conserver une telle intégrité robuste du collecteur eu égard à son extension longitudinale conséquente et des efforts auxquels il est normalement soumis. En cas de choc piéton, la grille d'auvent est soumise aux efforts en résultant et est apte à se déformer voire à se rompre dans une zone fragilisée de la grille d'auvent à fonction de fusible.

On reconnaîtra ainsi principalement le dispositif de montage de la présente invention en ce que les extrémités longitudinales de la grille d'auvent sont longitudinalement débordantes par rapport aux extrémités longitudinales du collecteur et sont maintenues plaquées contre les doublures d'aile par suite d'une légère déformation élastique de la grille d'auvent dans son plan global.

La grille d'auvent et le collecteur sont notamment chacun fixés à la caisse par leur fond, en exemption de supports intermédiaires de fixation du collecteur aux doublures d'aile habituellement utilisés. Les extrémités du collecteur sont notamment disposées à distance des doublures d'aile, et lesdits débordements de la grille d'auvent étant interposés en appui élastique respectivement entre les extrémités du collecteur et les doublures d'aile.

Le plaquage de la grille d'auvent contre les doublures d'ailes est un placage élastique autorisé par la souplesse intrinsèque de la grille d'auvent, dont l'éventuelle déformation à cet effet est à apprécier au regard des éventuels écarts de positionnement des doublures d'ailes transversalement au véhicule.

Pour favoriser l'éventuelle déformation de la grille d'auvent procurant son plaquage contre les doublures d'aile, la grille d'auvent est de préférence globalement arquée entre ses extrémités longitudinales et est composée de deux éléments de grille aboutés, notamment par l'intermédiaire d'organes d'emboîtement à déformation élastique. La conformation arquée de la grille d'auvent permet de conforter sa faculté à s'adapter à d'éventuels écarts de position transversale des doublures d'ailes montées sur la caisse. En effet, la grille d'auvent est apte à se déformer légèrement dans son plan global entre ses extrémités longitudinales lors de sa mise en appui contre les doublures d'ailes.

Au moins la grille d'auvent est avantageusement fixée à la caisse à chacune de ses extrémités longitudinales par un organe de fixation, tel que par boulonnage. La fixation de la grille d'auvent sur la caisse est notamment réalisée à chacune de ses extrémités longitudinales par l'intermédiaire d'un élément de paroi globalement plan incorporé au débordement de la grille d'auvent et orienté parallèlement au plan général de la grille d'auvent. Par suite d'une fixation de la grille d'auvent sur la caisse, la grille d'auvent est plaquée contre le collecteur d'auvent en évitant toute fixation de la grille d'auvent sur le collecteur.

Ledit élément de paroi est par exemple formé d'une semelle ou par exemple encore est agencé en patte de fixation.

De préférence, les débordements des extrémités longitudinales de la grille d'auvent comportent des premières parois de prise de contacts antagonistes longitudinalement contre des deuxièmes parois de forme complémentaire respectivement ménagées aux extrémités longitudinales du collecteur.

Lesdites premières et deuxièmes parois forment par coopération des organes de positionnement longitudinal de la grille d'auvent sur le collecteur, en étant orientées l'une vers l'autre pour ménager des contacts longitudinaux antagonistes de la grille d'auvent contre le collecteur.

Les première et deuxième parois sont notamment globalement inclinées par rapport au plan global de la grille d'auvent, en étant par exemple de conformation globalement planes ou par exemple encore de conformation courbes ou en d'autres termes conformées en arceau.

Les premières et deuxièmes parois autorisent ainsi un glissement relatif entre la grille d'auvent et le collecteur lors de leur assemblage l'une à l'autre, facilitant pour l'opérateur le positionnement de la grille d'auvent contre les doublures d'aile. Il est ainsi facilité pour l'opérateur la mise en interposition longitudinale des débordements de la grille d'auvent entre les extrémités longitudinales du collecteur et les doublures d'aile. Les premières et deuxièmes parois forment ainsi par coopération des rampes de guidage et de positionnement longitudinal de la grille d'auvent sur le collecteur lors de leur assemblage.

Les débordements des extrémités longitudinales de la grille d'auvent sont placés en contacts antagonistes longitudinalement contre le collecteur d'une part, et sont placés en appuis antagonistes longitudinalement contre les doublures d'ailes d'autre part. Les débordements des extrémités longitudinales de la grille d'auvent sont logés entre les extrémités longitudinales du collecteur et les doublures d'ailes.

Par suite, la grille d'auvent est emboîtée à ses extrémités longitudinales entre le collecteur et les doublures d'aile par l'intermédiaire des débordements. Un tel emboîtement est élastiquement autorisé sous l'effet d'une éventuelle déformation de la grille d'auvent dans son plan global entre ses extrémités longitudinales.

Plus particulièrement, les débordements des extrémités longitudinales de la grille d'auvent comportent des ailes longitudinales orientées perpendiculairement au plan global de la grille d'auvent ou en d'autres termes perpendiculairement à sa grande face orientée vers le collecteur. Les tranches respectives desdites ailes forment les premières parois de prise de contacts longitudinaux antagonistes de la grille d'auvent contre le collecteur.

De préférence, un premier joint d'étanchéité à profil constant en mousse à cellules ouvertes s'étend le long du bord inférieur de la grille d'auvent. Les parties du premier joint d'étanchéité s'étendant respectivement le long des faces d'extrémité longitudinale de la grille d'auvent sont disposées en saillie vers les doublures d'ailes contre lesquelles le premier joint d'étanchéité est prévu d'être plaqué. Par suite de l'assemblage de la grille d'auvent et du collecteur entre eux, le premier joint d'étanchéité se trouve comprimé d'une part entre la grille d'auvent et le collecteur et d'autre part entre la grille d'auvent et les doublures d'aile.

Le premier joint d'étanchéité est notamment issu d'un profilé en mousse à cellules ouvertes, dont le profil constant est indifféremment de conformation polygonale ou circulaire. Une conformation simple et adaptée du profil constant du premier joint d'étanchéité est par exemple une conformation carrée. On relèvera que le premier joint d'étanchéité est obtenu à moindres coûts. En outre, la souplesse de la mousse à cellules ouvertes autorise une mise en conformation aisée du premier joint d'étanchéité le long du bord inférieur de la grille d'auvent lors de sa fixation par adhésif sur la grille d'auvent.

Un deuxième joint d'étanchéité à profil constant s'étend le long du bord longitudinal supérieur de la grille d'auvent dédié à son affleurement avec le capot du véhicule. Le deuxième joint d'étanchéité s'étend entre les faces d'extrémité longitudinale de la grille d'auvent prenant contact avec les doublures d'aile, en étant notamment typiquement agencé en un tube de mousse à profil constant.

Le deuxième joint d'étanchéité est apte à s'étendre entre les faces d'extrémité longitudinale de la grille d'auvent prenant contact avec les doublures d'aile, en étant de préférence fixé à la grille d'auvent par emboîtement élastique. En effet, la formation du premier joint d'étanchéité à partir du profilé en mousse facilite une telle extension du deuxième joint, en évitant des difficultés d'accostage de forme entre le deuxième joint d'étanchéité et le premier joint d'étanchéité.

L'un quelconque au moins, et de préférence l'ensemble, du premier joint d'étanchéité et du deuxième joint d'étanchéité est avantageusement fixé à la grille d'auvent par un matériau adhésif.

La grille d'auvent comporte de préférence au moins une zone de fragilisation à fonction de fusible en cas de choc piéton. Plus particulièrement, chacun desdits éléments de paroi de la grille d'auvent exploités pour sa fixation sur le châssis comporte une telle zone de fragilisation. Le collecteur peut être conservé d'une structure robuste sans faire obstacle à la formation d'un fusible sur l'ensemble d'auvent et plus particulièrement sur ledit élément de paroi, rompant en cas de choc piéton par suite de la prise d'appui de la grille d'auvent contre les doublures d'aile.

Ledit ensemble d'auvent est apte à être fixé sur la caisse d'un véhicule. L'ensemble d'auvent de la présente invention comporte notamment une grille d'auvent dont les extrémités longitudinales sont longitudinalement débordantes par rapport aux extrémités longitudinales du collecteur. La grille d'auvent est notamment arquée dans son plan global entre ses extrémités longitudinales. Le bord inférieur de la grille d'auvent est avantageusement équipé, par l'intermédiaire d'un matériau adhésif, d'un dit premier joint d'étanchéité formé à partir d'un profilé de mousse à cellules ouvertes à profil constant.

Des exemples de réalisation de la présente invention vont être décrits en relation avec les figures des planches annexées, dans lesquelles :
La figure 1 est une illustration en perspective d'un ensemble d'auvent conforme à la présente invention, installé à l'avant d'un véhicule automobile.
La figure 2 est une illustration en perspective éclatée de l'une des extrémités longitudinales d'un ensemble d'auvent selon un premier exemple de réalisation de la présente invention, dans le contexte de son montage sur la caisse d'un véhicule automobile.
La figure 3 est une illustration en perspective éclatée de l'une des extrémités longitudinales de l'ensemble d'auvent représenté sur la figure 2, installé sur la caisse du véhicule.
La figure 4 est une illustration en perspective de l'une des extrémités longitudinales d'un ensemble d'auvent selon un deuxième exemple de réalisation de la présente invention, installé sur la caisse du véhicule.

Pour clarifier et rendre aisée la lecture de la description qui va être faite de la présente invention en relation avec les figures des planches annexées, les organes communs représentés sur les différentes figures sont respectivement identifiés dans les descriptions propres à ces figures avec les mêmes numéros et/ou lettres de référence, sans impliquer leur représentation individuelle et/ou leur référencement sur chacune des figures ni un agencement identique desdits organes communs entre des formes spécifiques de réalisation.

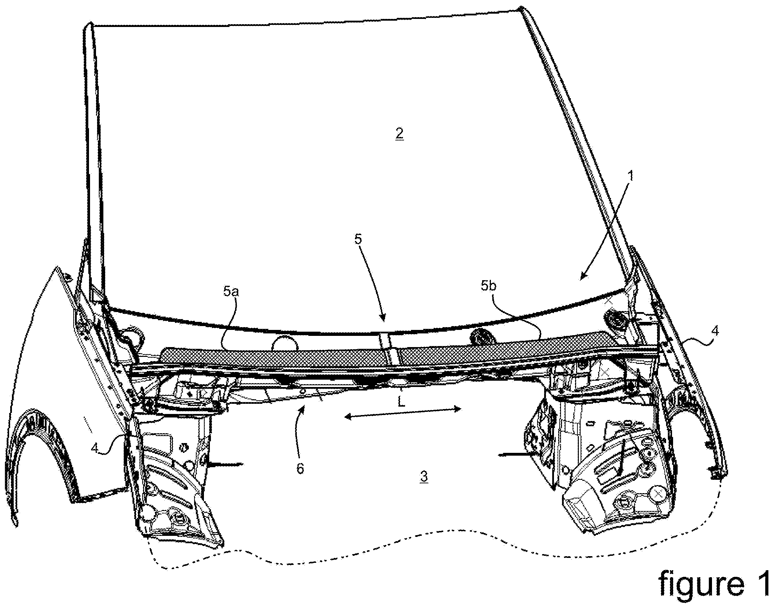

Sur la figure 1, la zone avant d'un véhicule automobile est munie d'un ensemble d'auvent 1 interposé entre le bas du parebrise 2 et le haut du capot 3 du véhicule. L'ensemble d'auvent 1 s'étend suivant sa longueur L transversalement au véhicule par rapport à sa direction de progression, entre des doublures d'aile 4 droite et gauche incorporées à la caisse du véhicule. L'ensemble d'auvent 1 comprend une grille d'auvent 5 globalement plane disposée à la face supérieure d'un collecteur 6 et composée de deux éléments de grilles 5a, 5b aboutés suivant la direction longitudinale L d'extension de l'ensemble d'auvent 1.

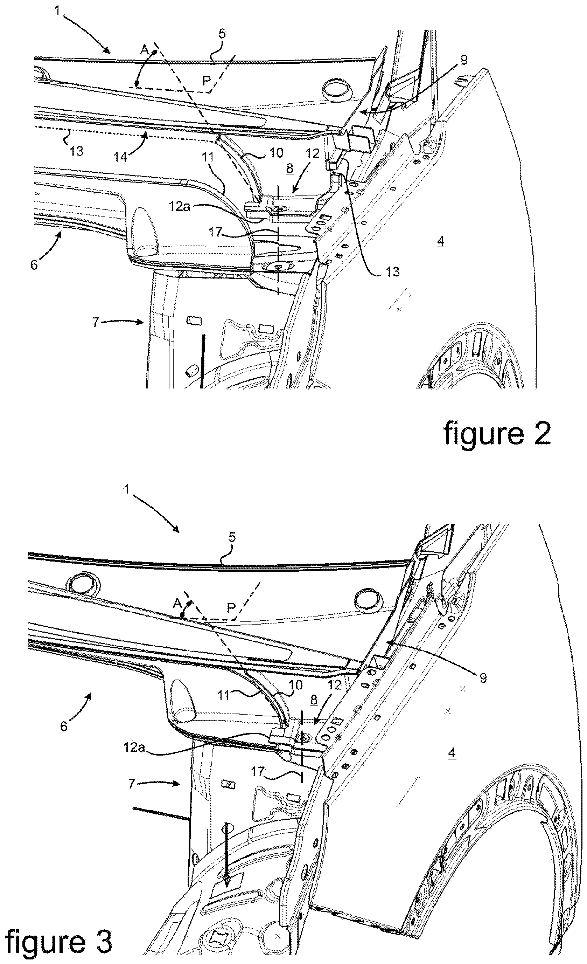

Sur les figures 2, figure 3 et figure 4, l'ensemble d'auvent 1 est illustré en situation de montage sur la caisse 7 du véhicule. Seule l'une des extrémités de l'ensemble d'auvent 1 est représentée, les dispositions décrites étant bien évidemment à transposer aussi à son autre extrémité longitudinale.

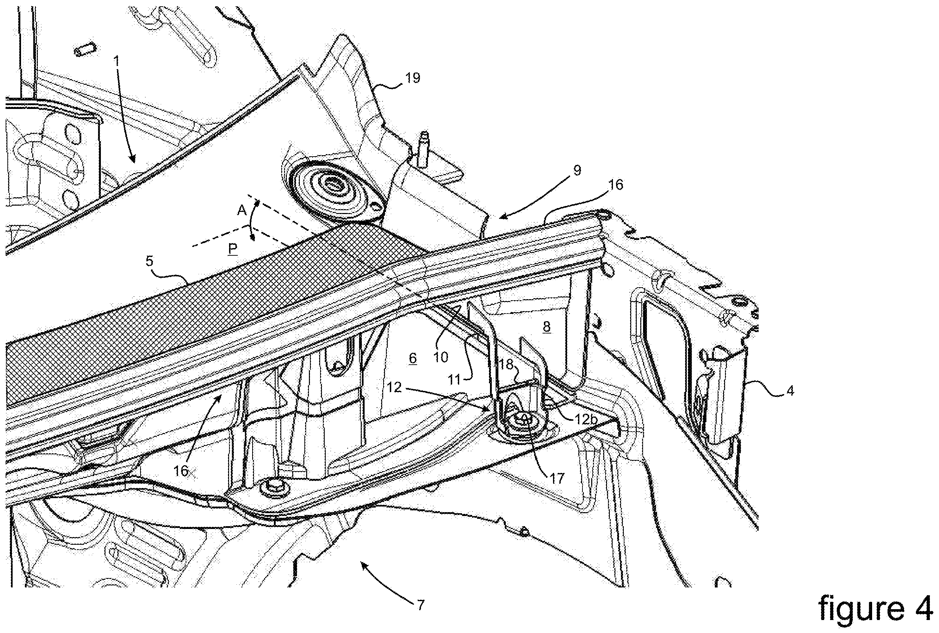

Sur la figure 2, l'ensemble d'auvent 1 est représenté en situation d'approche de la grille d'auvent 5 vers le collecteur 6 lors de l'installation de l'ensemble d'auvent 1 sur la caisse 7 du véhicule. Sur la figure 3 et la figure 4, l'ensemble d'auvent 1 est représenté monté sur la caisse 7 du véhicule.

Sur les figures, l'extrémité longitudinale de la grille d'auvent 5 est longitudinalement débordante par rapport à l'extrémité longitudinale du collecteur 6. Le débordement 8 de la grille d'auvent 5 est logé par emboîtement entre la doublure d'aile 4 et l'extrémité longitudinale du collecteur 6. Lorsque l'ensemble d'auvent 1 est monté sur le véhicule, tel qu'illustré sur la figure 3 et la figure 4, le débordement 8 de la grille d'auvent 5 est placé en contacts longitudinalement antagonistes entre la doublure d'aile 4 et le collecteur 6. Le débordement 8 de la grille d'auvent 5 est placé à sa face d'extrémité longitudinale 9 en appui contre la doublure d'aile 4.

Le débordement 8 de la grille d'auvent 5 comporte une première paroi 10 de prise de contact contre une deuxième paroi 11 de forme complémentaire du collecteur 6 ménagée à son extrémité longitudinale. La première paroi 10 et par suite la deuxième paroi 11 sont globalement inclinées par rapport au plan P global de la grille d'auvent 5, d'un angle A de l'ordre de 45°.

On relèvera que lors de l'approche de la grille d'auvent 5 vers le collecteur 6, la première paroi 10 et la deuxième paroi 11 coopèrent entre elles pour guider la grille d'auvent 5 en position d'assemblage avec le collecteur 6 et de prise d'appui contre les doublures d'aile 4.

Sur l'exemple de réalisation illustré sur la figure 2 et la figure 3, la première paroi 10 et par suite la deuxième paroi 11 sont globalement conformées en arceau. Sur l'exemple de réalisation illustré sur la figure 4, la première paroi 10 et par suite la deuxième paroi 11 sont globalement planes.

La grille d'auvent 5 est typiquement de structure relativement souple, en raison de la faible épaisseur de ses parois et/ou du matériau dont elle est issue, tôle fine ou matière plastique notamment. La grille d'auvent 5 est en outre longitudinalement arquée dans son plan P global entre ses extrémités longitudinales, pour favoriser sa déformation par suite du montage de l'ensemble d'auvent 1 sur la caisse 7 du véhicule et des prises d'appuis antagonistes de ses débordements 8 contre les doublures d'aile 4 et contre le collecteur 6, tel qu'illustré sur la figure 3 et la figure 4.

Sur la figure 2, un premier joint d'étanchéité 13 s'étend le long du bord inférieur 14 de la grille d'auvent orienté vers le collecteur 6, en étant saillant vers la doublure d'aile 4 à la face d'extrémité 9 de la grille d'auvent 5. Le premier joint d'étanchéité 13 est issu d'un profilé en mousse à cellules ouverte dont le profil est constant, tel que de conformation carrée sur l'exemple de réalisation illustré.

Par suite du montage de l'ensemble d'auvent 1 sur la caisse 7 tel qu'illustré sur la figure 3 et la figure 4, le premier joint d'étanchéité 13 se trouve comprimé entre la grille d'auvent 5 et la doublure d'aile 4 d'une part, et entre la grille d'auvent 5 et le collecteur 6 d'autre part.

Sur la figure 4, la grille d'auvent 5 est munie d'un deuxième joint d'étanchéité 16 s'étendant le long de son bord longitudinal supérieur 15 affleurant le capot 3 en position de fermeture. Lorsque l'ensemble d'auvent 1 est monté sur le véhicule, le bord longitudinal supérieur 15 de la grille d'auvent 5 affleure la face intérieure du capot 3 en position de fermeture par l'intermédiaire du deuxième joint d'étanchéité 16.

Le deuxième joint d'étanchéité 16 est issu d'un profilé tubulaire en mousse à cellule ouverte, s'étendant entre les faces d'extrémité longitudinale 9 de la grille d'auvent 5 appliquées contre l'une et l'autre des doublures d'ailes 4 droite et gauche du véhicule.

On relèvera que la faculté d'extension du deuxième joint d'étanchéité 16 d'un bout à l'autre de la grille d'auvent 5, est réalisée sans interférence avec le premier joint d'étanchéité 13 en l'absence d'éléments d'étanchéité de forme spécifique dont sont traditionnellement équipés les ensemble d'auvent 1 connus.

On relèvera aussi que de par leur structure, le premier joint d'étanchéité 13 et le deuxième joint d'étanchéité 16 peuvent être aisément déformés suivant leur extension profilée, pour épouser la conformation de la grille d'auvent 5 et ainsi procurer une étanchéité performante entre la grille d'auvent 5 et le collecteur 6 d'une part, et entre la grille d'auvent 5 et les doublures d'aile 4 d'autre part.

En outre, le premier joint d'étanchéité 13 et le deuxième joint d'étanchéité 16 peuvent être fixés à la grille d'auvent 5 au moyen d'un matériau adhésif. Un tel matériau adhésif est susceptible d'être formé de rubans à double faces adhésives apposés en interposition entre la grille d'auvent 5 et respectivement le premier joint d'étanchéité 13 et le deuxième joint d'étanchéité 16.

Par ailleurs sur les figures, la grille d'auvent 5 est fixée à la caisse 7 à chacune de ses extrémités longitudinales au moyen d'un organe de fixation 17, tel que par boulonnage par exemple. A cet effet, chaque organe de fixation 17 traverse un élément de paroi 12 globalement plan incorporé à la grille d'auvent 5 en étant orienté sensiblement parallèlement à son plan général. L'organe de fixation est fixé sur la caisse 7, tel que notamment sur un élément de caisse en outre dédié à la fixation d'un amortisseur.

Sur l'exemple de réalisation illustré sur la figure 2 et la figure 3, ledit élément de paroi 12 est formé d'une semelle 12a. Sur l'exemple de réalisation illustré sur la figure 4, ledit élément de paroi est ménagé sur une patte de fixation 12b.

Sur la figure 4, la patte de fixation 12b comporte une zone de fragilisation 18 apte à se rompre sous l'effet d'un effort de poussée exercé à un seuil prédéfini contre l'ensemble d'auvent 1 et plus spécifiquement contre la grille d'auvent 5. La zone de fragilisation 18 confère à la patte de fixation 12b une fonction de fusible à l'encontre d'une poussée provoquée en cas de choc piéton.

Par suite, la grille d'auvent 5 et le collecteur 6 peuvent être conjointement fixés sur le châssis 7 par l'intermédiaire de la patte de fixation 12b. En cas de choc piéton, la fonction de fusible conférée à la patte de fixation 12b libère de leur fixation sur le châssis 7, à leurs extrémités longitudinales, non seulement la grille d'auvent 5 mais aussi le collecteur 6.

Subsidiairement, des lèvres 19 souples en matière plastique sont ménagées le long du bord supérieur transversal des extrémités longitudinales de la grille d'auvent 5. La matière constitutive des lèvres 19 est notamment un éthylène-propylène-diène monomère (EPDM). Les lèvres 19 sont avantageusement surmoulées de fabrication sur la grille d'auvent 5. Les lèvres 19 sont prévues pour être plaquées en interposition entre la grille d'auvent 5 et le capot 3 du véhicule, en procurant un effet visible par la clientèle d'une finition étanche entre la grille d'auvent 5 et le capot 3.

## Revendications

1. Ensemble d'auvent (1) apte à être fixé sur la caisse (7) d'un véhicule automobile au moyen d'un dispositif de montage, l'ensemble d'auvent (1) s'étendant suivant sa longueur entre deux doublures d'aile (4) du véhicule, l'ensemble d'auvent (1) comprenant un collecteur (6) de fluide amovible fixé à la caisse (7), une grille d'auvent (5) globalement plane fixée sur le collecteur (6) à sa face supérieure et des organes d'étanchéité (13,16) ménagés sur l'ensemble d'auvent (1), **caractérisé en ce que** les extrémités longitudinales de la grille d'auvent (5) sont longitudinalement débordantes (8) par rapport aux extrémités longitudinales du collecteur (6) et sont maintenues plaquées respectivement contre les doublures d'ailes (4) par déformation élastique de la grille d'auvent (5) dans son plan global.

2. Ensemble d'auvent selon la revendication 1, **caractérisé en ce que** la grille d'auvent (5) est globalement arquée entre ses extrémités longitudinales et est composée de deux éléments de grille aboutés.

3. Ensemble d'auvent selon l'une quelconque des revendications 1 et 2, **caractérisé en ce qu'**au moins la grille d'auvent (5) est fixée à la caisse (7) à chacune de ses extrémités longitudinales par un organe de fixation (17), par l'intermédiaire d'un élément de paroi (12) globalement plan incorporé au débordement (8) de la grille d'auvent (5) et orienté parallèlement au plan général de la grille d'auvent (5).

4. Ensemble d'auvent selon l'une quelconque des revendications 1 à 3, **caractérisé en ce que** les débordements (8) des extrémités longitudinales de la grille d'auvent (5) comportent des premières parois (10) de prise de contacts antagonistes longitudinalement contre des deuxièmes parois (11) de forme complémentaire respectivement ménagées aux extrémités longitudinales du collecteur (6).

5. Ensemble d'auvent selon l'une quelconque des revendications 1 à 4, **caractérisé en ce qu'**un premier joint d'étanchéité (13) à profil constant en mousse à cellules ouvertes s'étend le long du bord inférieur (14) de la grille d'auvent (5), les parties du premier joint d'étanchéité (13) s'étendant respectivement le long des faces d'extrémité longitudinale (9) de la grille d'auvent (5) étant disposées en saillie vers les doublures d'ailes (4).

6. Ensemble d'auvent selon l'une quelconque des revendications 1 à 5, **caractérisé en ce qu'**un deuxième joint d'étanchéité (16) à profil constant s'étend le long du bord longitudinal supérieur (15) de la grille d'auvent (5) dédié à son affleurement avec le capot (3) du véhicule, le deuxième joint d'étanchéité (16) s'étendant entre les faces d'extrémité longitudinale (9) de la grille d'auvent (5) prenant contact avec les doublures d'aile (4).

7. Ensemble d'auvent selon l'une quelconque des revendications 5 et 6, **caractérisé en ce que** l'un quelconque au moins du premier joint d'étanchéité (13) et du deuxième joint d'étanchéité (16) est fixé à la grille d'auvent (5) par un matériau adhésif.

8. Ensemble d'auvent selon l'une quelconque des revendications 1 à 7, **caractérisé en ce que** la grille d'auvent (5) comporte au moins une zone de fragilisation (18) à fonction de fusible en cas de choc piéton.

9. Ensemble d'auvent selon la revendication 3 et 8, **caractérisé en ce que** chacun desdits éléments de paroi (12) comporte une dite zone de fragilisation (18).

## Patentansprüche

1. Verdeckeinheit (1), die geeignet ist, an der Karosserie (7) eines Kraftfahrzeugs mittels einer Montagevorrichtung befestigt zu werden, wobei sich die Verdeckeinheit (1) über ihre Länge zwischen zwei Kotflügelverkleidungen (4) des Fahrzeugs erstreckt, wobei die Verdeckeinheit (1) einen abnehmbaren, an der Karosserie (7) befestigten Flüssigkeitssammler (6), ein allgemein ebenes Verdeckgitter (5), das an der Oberseite des Sammlers (6) befestigt ist, und Dichtungselemente (13) umfasst, 16), die an der Markisenbaugruppe (1) vorgesehen sind, **dadurch gekennzeichnet, dass** die Längsenden des Markisengitters (5) in Längsrichtung (8) von den Längsenden des Kollektors (6) vorstehen (6) und durch elastische Verformung des Markisengitters (5) in seiner Gesamtebene jeweils gegen die Flügelverkleidungen (4) gedrückt gehalten werden.

2. Baldachinaufbau nach Anspruch 1, **dadurch gekennzeichnet, daß** das Baldachin-Gitter (5) zwischen seinen Längsenden im allgemeinen bogenförmig ist und aus zwei aneinanderstoßenden Gitterelementen zusammengesetzt ist.

3. Markisenbaugruppe nach einem der Ansprüche 1 und 2, **dadurch gekennzeichnet, dass** zumindest das Markisengitter (5) an jedem seiner Längsenden durch ein Befestigungsorgan (17) am Körper (7) befestigt ist, und zwar mit Hilfe eines allgemein ebenen Wandelements (12), das in den Überhang (8) des Markisengitters (5) integriert und parallel zur allgemeinen Ebene des Markisengitters (5) ausgerichtet ist.

4. Haubenanordnung nach einem der Ansprüche 1 bis 3, **dadurch gekennzeichnet, dass** die Überhänge (8) der Längsenden des Haubengitters (5) erste Wände (10) zur Herstellung von in Längsrichtung gegenüberliegenden Kontakten gegen zweite Wände (11) mit komplementärer Form aufweisen, die jeweils an den Längsenden des Kollektors (6) vorgesehen sind.

5. Kabinenhaubenanordnung nach einem der Ansprüche 1 bis 4, **dadurch gekennzeichnet, daß** sich eine erste Dichtung (13) mit konstantem Profil aus offenzelligem Schaumstoff entlang der Unterkante (14) des Kabinenhaubengitters (5) erstreckt, wobei die Teile der ersten Dichtung (13), die sich jeweils entlang der Längsstirnflächen (9) des Kabinenhaubengitters (5) erstrecken, in Richtung der Flügellinien (4) vorstehend angeordnet sind.

6. Haubenanordnung nach einem der Ansprüche 1 bis 5, **dadurch gekennzeichnet, dass** sich eine zweite Dichtung (16) mit konstantem Profil entlang der oberen Längskante (15) des Haubengitters (5) erstreckt, die mit der Motorhaube (3) des Fahrzeugs bündig abschließt, wobei sich die zweite Dichtung (16) zwischen den Längsendflächen (9) des Haubengitters (5) erstreckt und mit den Flügelverkleidungen (4) in Kontakt steht.

7. Kabinenhaubenanordnung nach einem der Ansprüche 5 und 6, **dadurch gekennzeichnet, dass** mindestens eine der ersten Dichtung (13) und der zweiten Dichtung (16) an dem Kabinenhaubengitter (5) durch ein Klebematerial befestigt ist.

8. Kabinenhaubenanordnung nach einem der Ansprüche 1 bis 7, **dadurch gekennzeichnet, dass** das Kabinenhaubengitter (5) mindestens eine Schwächungszone (18) mit einer Sicherungsfunktion im Falle eines Fußgängeraufpralls aufweist.

9. Baldachinaufbau nach den Ansprüchen 3 und 8, **dadurch gekennzeichnet, dass** jedes der Wandelemente (12) eine solche Schwächungszone (18) aufweist.

## Claims

1. A canopy assembly (1) suitable for being fixed to the body (7) of a motor vehicle by means of a mounting device, the canopy assembly (1) extending along its length between two fender liners (4) of the vehicle, the canopy assembly (1) comprising a removable fluid collector (6) fixed to the body (7), a generally plane canopy grille (5) fixed to the collector (6) at its top face, and sealing members (13), 16) provided on the canopy assembly (1), **characterised in that** the longitudinal ends of the awning grid (5) project longitudinally (8) from the longitudinal ends of the collector (6) and are held pressed respectively against the fender liners (4) by elastic deformation of the awning grid (5) in its overall plane.

2. A canopy assembly according to claim 1, **characterised in that** the canopy grid (5) is generally arcuate between its longitudinal ends and is composed of two abutting grid elements.

3. An awning assembly according to any one of claims 1 and 2, **characterised in that** at least the awning grid (5) is fixed to the body (7) at each of its longitudinal ends by a fixing member (17), by means of a generally plane wall element (12) incorporated in the overhang (8) of the canopy grid (5) and oriented parallel to the general plane of the awning grid (5).

4. A canopy assembly according to any one of claims 1 to 3, **characterised in that** the overhangs (8) of the longitudinal ends of the canopy grid (5) comprise first walls (10) for making longitudinally opposing contacts against second walls (11) of complementary shape respectively provided at the longitudinal ends of the collector (6).

5. A canopy assembly according to any one of claims 1 to 4, **characterised in that** a first constant profile seal (13) of open-cell foam extends along the lower edge (14) of the canopy grid (5), the parts of the first seal (13) extending respectively along the longitudinal end faces (9) of the canopy grid (5) being arranged projecting towards the fender liners (4).

6. A canopy assembly according to any one of claims 1 to 5, **characterised in that** a second seal (16) of constant profile extends along the upper longitudinal edge (15) of the canopy grille (5) dedicated to its flush with the bonnet (3) of the vehicle, the second seal (16) extending between the longitudinal end faces (9) of the canopy grille (5) making contact with the wing linings (4).

7. A canopy assembly according to any one of claims 5 and 6, **characterised in that** at least any one of the first seal (13) and the second seal (16) is fixed to the canopy grille (5) by an adhesive material.

8. A canopy assembly according to any one of claims 1 to 7, **characterised in that** the canopy grille (5) comprises at least one weakening zone (18) with a function of fuse in the event of a pedestrian impact.

9. A canopy assembly according to claims 3 and 8, **characterized in that** each of said wall elements (12) comprises a said weakening zone (18).
